# EUROPEAN PATENT SPECIFICATION

(11) **EP 3 489 724 B1**
(45) Date of publication and mention of the grant of the patent: **21.10.2020**
(21) Application number: 18207582.0
(22) Date of filing: 21.11.2018
(51) Int. Cl.: G01V 5/00

(54) **VEHICLE INSPECTION SYSTEM HAVING A TELESCOPIC PORTAL FRAME**
FAHHRZEUGINSPEKTIONSSYSTEM MIT EINEM TELESKOPISCHEN RAHMEN
SYSTÈME D'INSPECTION DE VÉHICULE AYANT UN PORTIQUE TELESCOPIQUE

(30) Priority: 24.11.2017 CN 201711188850
(43) Date of publication of application: 29.05.2019
(73) Proprietor: Nuctech Company Limited, Beijing 100084 (CN)
(72) Inventor: HE, Yuan, Beijing 100084 (CN); LI, Jianmin, Beijing 100084 (CN); GUO, Yiwei, Beijing 100084 (CN); LI, Yulan, Beijing 100084 (CN); SONG, Quanwei, Beijing 100084 (CN); MENG, Hui, Beijing 100084 (CN); CHEN, Zhiqiang, Beijing 100084 (CN); SHI, Junping, Beijing 100084 (CN); LI, Yuanjing, Beijing 100084 (CN); ZHANG, Li, Beijing 100084 (CN)
(74) Representative: Held, Stephan

(56) References cited:
- EP-B1- 2 802 864
- WO-A1-2014/121097
- US-B1- 6 542 580

## Description

The present invention is based on the CN application No. 201711188850.9 with the application date November 24, 2017, and claims priority thereof.

### FIELD OF THE INVENTION

The present invention relates to the field of radiation imaging inspection, and particularly to a vehicle inspection system

### BACKGROUND OF THE INVENTION

Vehicle inspection systems are inspection equipments installed at customs, civil aviation airports, etc. Using the principle of radiation imaging, a vehicle inspection system obtains a perspective image of an object in a vehicle by scanning the vehicle without opening the vehicle, thereby achieving inspection of the vehicle

A mobile vehicle inspection system needs to be transported to different places for inspection work. However, the height of the vehicle inspection system in the prior art is invariable, so there is a problem that the transportation of the vehicle inspection system is difficult or the road transportation height requirement is not satisfied. From EP2808864, a vehicle inspection system is known. It comprises a portal frame for forming an inspection passage, the portal frame comprising: a cabin for installing a ray source; and two vertical support arms respectively telescopically arranged at both sides of the cabin to support the cabin. US6542580 discloses a similar vehicle inspection system, except in that it also shows that the vertical support arm comprises a first segment and a second segment arranged in a vertical direction, the cabin being arranged on the second segment, and the second segment being movable relative to the first segment, the first segment is sleeved on the outer side of the second segment.

### SUMMARY OF THE INVENTION

An object of the present invention is to provide a vehicle inspection system to better meet transportation requirements.

The present invention provides a vehicle inspection system, as defined by independent claim 1, including a portal frame for forming an inspection passage, the portal frame including a cabin for installing a ray source and two vertical support arms respectively telescopically arranged at both sides of the cabin to support the cabin.

According to the claimed invention, the vertical support arm comprises a first segment and a second segment arranged in a vertical direction, the cabin being arranged on the second segment, and the second segment being movable relative to the first segment.

In some embodiments, the first segment is sleeved on the outer side of the second segment.

In some embodiments, the first segment is provided with a first guiding structure, and the second segment is provided with a second guiding structure, the first guiding structure being in sliding engagement with the second guiding structure.

In some embodiments, the first guiding structure comprises a first guide block extending in the vertical direction, and the second guiding structure comprises a second guide block extending in the vertical direction, one of the first guide block and the second guide block is provided with a vertical rib on an engaging surface thereof.

In some embodiments, the vehicle inspection system further comprises a position locking device for restricting movement of the second segment after the second segment reaches a preset position.

In some embodiments, the position locking device comprises a locking screw that is screwed to one of the first segment and the second segment, and when the locking screw is in a tightened state, an end of the locking screw abuts against the other of the first segment and the second segment.

In some embodiments, the vehicle inspection system further comprises a position locking device, which emits an in-position signal when the second segment reaches the preset position.

In some embodiments, the vehicle inspection system further comprises two support seats disposed under the two vertical support arms respectively, and the lower end of each vertical support arm is located in the middle of a support surface of the support seat.

In some embodiments, the vehicle inspection system further comprises three main support plates disposed under the two support seats, one of the three main support plates being disposed under one of the two support seats, and the other two of the three main support plates being disposed under the other of the two support seats.

In some embodiments, the support seat comprises a main support seat and an auxiliary support seat disposed at the longitudinal end of the main support seat, and the auxiliary support seat is foldable or telescopic relative to the main support seat.

In some embodiments, the vehicle inspection system further comprises an auxiliary support plate disposed under the auxiliary support seat.

In some embodiments, the vehicle inspection system further comprises a lateral arm disposed between two support seats, and a detector is mounted in the lateral arm.

In some embodiments, the vehicle inspection system further comprises a support ramp disposed between the two support seats, the lateral arm being fixedly relative to the support ramp.

In some embodiments, the vehicle inspection system further comprises auxiliary ramps disposed on the support ramp, and the auxiliary ramps include a first auxiliary ramp and a second auxiliary ramp respectively located on the left and right sides.

In some embodiments, the auxiliary ramps are telescopic or foldable relative to the support ramp.

In some embodiments, the vehicle inspection system further comprises a vertical detecting arm disposed on lateral sides of the vertical support arms, and a detector is mounted on the vertical detecting arm.

In some embodiments, the vehicle inspection system further comprises a position adjusting mechanism for adjusting the position of the vertical detecting arm.

In some embodiments, the position adjusting mechanism is configured to adjust the angle of the vertical detecting arm; and/or the position adjusting mechanism is configured to adjust the position of the vertical detecting arm in the front-rear direction; and/or the position adjusting mechanism is configured to adjust the position of the vertical detecting arm in the left-right direction.

In some embodiments, the position adjusting mechanism comprises a connecting seat for connecting the vertical detecting arm and the vertical support arm, the connecting seat including a first connecting portion for connection with the vertical detecting arm and a second connecting portion for connection with the vertical support arm, wherein the connection position between the vertical detecting arm and the first connecting portion is variably set; and/or the connection position between the vertical support arm and the second connecting portion is variable.

In some embodiments, a first long hole is disposed on one of the first connecting portion and the vertical detecting arm, and a first connector is provided on the other of the first connecting portion and the vertical detecting arm, the first connector being disposed in the first long hole; and/or a second long hole is disposed on one of the second connecting portion and the vertical support arm, and a second connector is provided on the other of the second connecting portion and the vertical support arm, the second connector being disposed in the second long hole.

In some embodiments, the first long hole is inclined or perpendicular relative to the second long hole.

In some embodiments, wherein the position adjusting mechanism further comprises a first limiting structure for limiting the position of the vertical detecting arm relative to the first connecting portion, the first limiting structure comprising a first abutting seat provided on the vertical detecting arm, a first adjusting column and a second adjusting column respectively abutting against two sides of the first abutting seat in the longitudinal direction of the first long hole, the first adjusting column and the second adjusting column being movably provided on the first connecting portion along the length direction of the first long hole and having at least two connection positions within the respective ranges of movement; and/or the position adjusting mechanism further comprises a second limiting structure for limiting the position of the second connecting portion relative to the vertical support arm, the second limiting structure comprising a second abutting seat provided on the vertical support arm and a third adjusting column and a fourth adjusting column respectively abutting against two sides of the second abutting seat in the longitudinal direction of the second long hole, the third adjusting column and the fourth adjusting column being movably provided on the second connecting portion along the length direction of the second long hole and having at least two connection positions within the respective ranges of movement.

In some embodiments, the inspection system comprises at least two connecting seats disposed in the vertical direction.

Based on the vehicle inspection system provided in the present invention, the vehicle inspection system comprises a portal frame for forming an inspection passage, the portal frame including a cabin for installing a ray source and two vertical support arms respectively telescopically arranged at both sides of the cabin to support the cabin. The vertical support arm are telescopic. When the vehicle inspection system is in transition, the two vertical support arms are controlled to retract so as to reduce the overall height of the vehicle inspection system to meet the transportation height requirement; and after reaching the work site, the two vertical support arms are controlled to extend so that the height of the inspection passage meets the inspection operation requirement. Therefore, the vehicle inspection system of the present invention can better meet the transportation height requirement.

Other features of the present invention and advantages thereof will become apparent from the following detailed description of the exemplary embodiments of the present invention with reference to the drawings.

### BRIEF DESCRIPTION OF THE ACCOMPANYING DRAWINGS

The drawings described here are used for providing further understanding of the present invention and form part of the present application, and the illustrative embodiments of the present invention and the description thereof are intended to explain the present invention, rather than improperly limiting the present invention. In the drawings:
Fig. 1 is a three-dimensional structure diagram of a vehicle inspection system in a transportation state in an embodiment of the present invention;
Fig. 2 is a back view structure diagram of the vehicle inspection system shown in Fig. 1;
Fig. 3 is a front view structure diagram of the vehicle inspection system in a working state in the embodiment of the present invention;
Fig. 4 is a structure diagram of the vehicle inspection system in direction A-A shown in Fig. 3;
Fig. 5 is a back view structure diagram of the vehicle inspection system shown in Fig. 3;
Fig. 6 is a structure diagram of engagement between a first segment and a second segment in Fig. 3.
Fig. 7 is a top view structure diagram of the vehicle inspection system shown in Fig. 3;
Fig. 8 is a left view structure diagram of the vehicle inspection system shown in Fig. 3;
Fig. 9 is a structure diagram of the vehicle inspection system in direction D-D shown in Fig. 8; and
Fig. 10 is a partial enlarged diagram of part J in Fig. 9.

### DETAILED DESCRIPTION OF THE PREFERRED EMBODIMENTS

A clear and complete description of the technical solutions in the embodiments of the present invention will be given below in conjunction with the drawings in the embodiments of the present invention. Apparently, the embodiments described are part of, rather than all of, the embodiments of the present invention. The following description of at least one exemplary embodiment is actually only illustrative, and is not used as any limitation of the present invention and application or use thereof. All other embodiments obtained by those of ordinary skill in the art without creative effort, based on the embodiments in the present invention, should fall into the protection scope of the present invention.

The relative arrangement of the components and the steps, numerical expressions and numerical values set forth in the embodiments do not limit the scope of the present invention unless otherwise specified. Moreover, it should be understood that for the convenience of description, the dimensions of the various parts shown in the drawings are not drawn in the actual scale relationship. In all the examples shown and discussed herein, any specific value should be construed as exemplary only and not as a limitation. Accordingly, other examples of the exemplary embodiments may have different values. It should be noted that similar reference numerals and letters indicate similar items in the following drawings, and therefore, once an item is defined in one drawing, it does not need to be further discussed in the subsequent drawings.

For the convenience of description, spatial relative terms such as "over...", "above...", "on the upper surface..." and "upper..." can be used herein to describe the spatial positional relationship between one device or feature with other devices or features as shown in a figure It should be understood that the spatially relative terms are intended to encompass other different orientations in use or operation in addition to the orientation of the device described in the figure. For example, if the device in the figure is inverted, the device described as "above other devices or structures" or "over other devices or structures" will thereafter be positioned "below other devices or structures" or "under other devices or structures". Thus, the exemplary term "above..." can include both orientations of being "above..." and "below...". The device can also be positioned in other different ways (rotated 90 degrees or at other orientations) and the spatial relative description as used herein is explained accordingly.

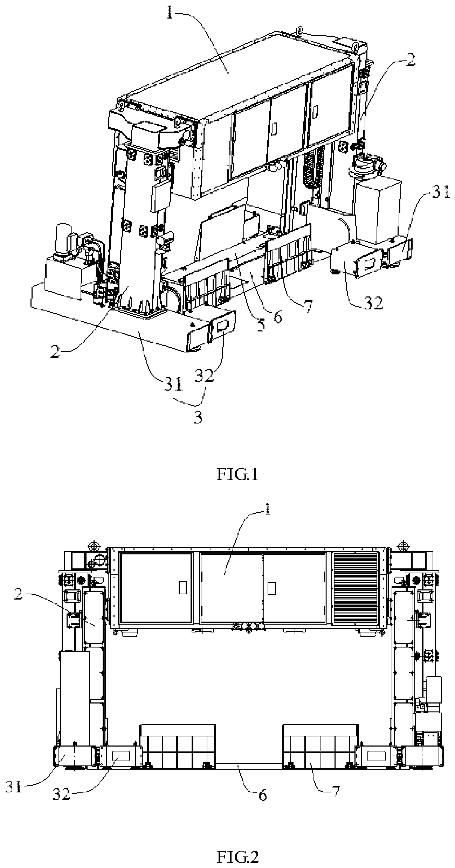

Referring to Figs. 1 to 10, a vehicle inspection system in an embodiment of the present invention comprises a portal frame for forming an inspection passage, the portal frame including a cabin 1 for installing a ray source and two vertical support arms 2 arranged at both sides of the cabin 1 respectively and supporting the cabin 1, the vertical support arm 2 being telescopic to allow the height of the cabin 1 to be changed. When site-transfer transportation is required, the vertical support arm 2 is controlled to retract so as to reduce the overall height of the inspection system to meet the transportation height requirement; and after reaching the work site, the vertical support arm 2 is controlled to extend so that the height of the inspection passage meets the inspection operation requirement. Therefore, the inspection system of the embodiment of the present invention can better meet the requirements of the site-transfer transportation. Moreover, when the inspection system of the embodiment of the present invention is used as a vehicle inspection system to inspect a vehicle, the height of the cabin can be adjusted according to the height of the vehicle to be inspected as the heights of various different vehicles differ greatly, thereby expanding the scope of applicability of the inspection system of the embodiment of the present invention.

The specific structure and working process of the inspection system in a specific embodiment of the present invention will be described in detail below with according to Figs. 1 to 10.

The inspection system of the embodiment is a vehicle inspection system. However, the structures of the inspection system of the embodiment can be applied to an inspection system for inspecting other articles.

It needs to be noted here that in the following description, the term "front" refers to the position of the vehicle relative to the inspection system when not entering the inspection passage, and the "rear" refers to the side opposite to the "front", and the terms "left" and "right" refer to the left and right directions formed when facing the front.

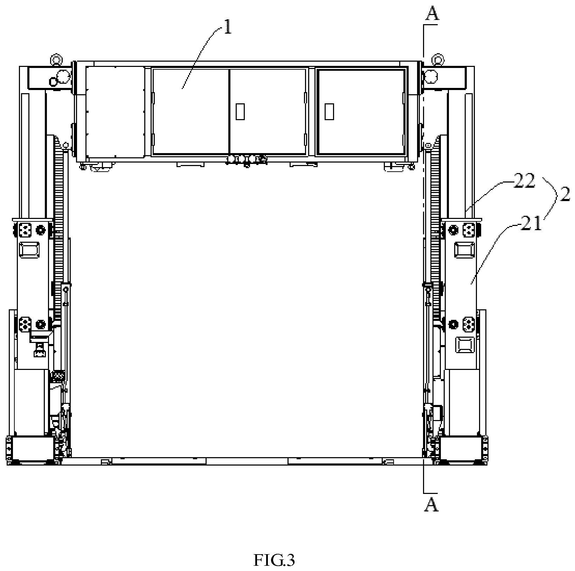

As shown in Fig. 1, the vehicle inspection system of the embodiment comprises a cabin 1 for installing a ray source and two vertical support arms 2 for supporting the cabin 1. The two vertical support arms 2 and the cabin 1 constitute a portal frame. The portal frame forms an inspection passage. The two vertical support arms are telescopic. Figs. 1 and 2 show the vertical support arm 2 in a retracted state. Fig. 3 shows the vertical support arm 2 in an extended state.

Specifically, the height of the inspection system of the embodiment in a working state is 3.45m , and the height of the inspection passage is 2.5m, which can meet the requirements for detecting various vehicles. The height of the inspection system of this embodiment is 2.35m in a transportation state, which can meet the height requirement for transportation.

In the embodiment, as shown in Fig. 3, the vertical support arm 2 comprises a first segment 21 and a second segment 22 arranged in a vertical direction, the cabin 1 being arranged on the second segment 22, and the second segment 22 being movable relative to the first segment 21. Downward movement of the second segment 22 relative to the first segment 21 can cause the vertical support arm 2 to retract, and upward movement of the second segment 22 relative to the first segment 21 can cause the vertical support arm 2 to extend.

Specifically in the embodiment, the first segment 21 is sleeved on the outer side of the second segment 22.

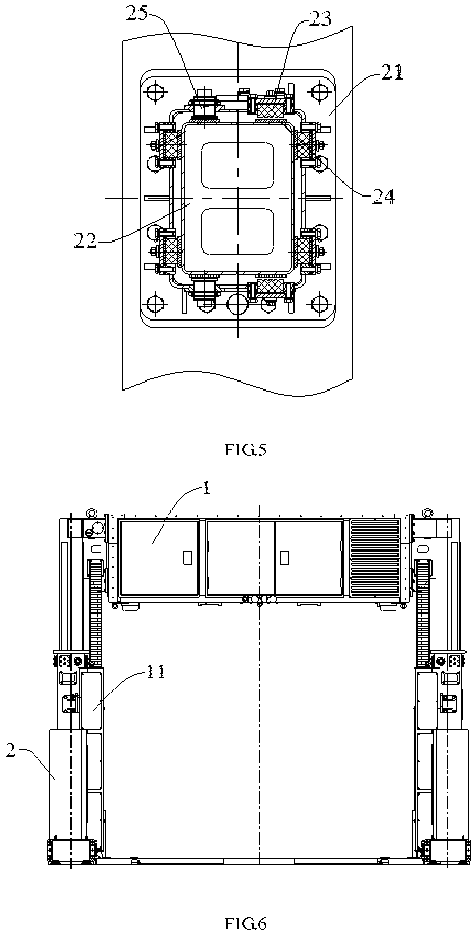

In the embodiment, as shown in Fig. 5, the first segment 21 is provided with a first guiding structure 23, and the second segment 22 is provided with a second guiding structure 24. The first guiding structure 23 is in sliding engagement with the second guiding structure 24. The second segment 22 moves relative to the first segment 21 by the sliding engagement between the first guiding structure 23 and the second guiding structure 24, so that the second segment 22 runs along a certain path, and the smoothness of extension and retraction of the vertical support arm 2 is improved. Moreover, the sliding engagement between the first guiding structure 23 and the second guiding structure 24 can reduce the friction between them, thereby reducing wear and prolonging the service life.

Specifically, in the embodiment, the first guiding structure 23 comprises a first guide block that extends in the vertical direction. The second guiding structure 24 comprises a second guide block that extends in the vertical direction. One of a mating surface of the first guide block that is sliding engaged with the second guide block and a mating surface of the second guide block that is sliding engaged with the first guide block is provided with a vertical rib. The sliding engagement between the first guide block and the second guide block is achieved by the engagement between the vertical rib and the mating surface, to reduce the contact area between the first guide block and the second guide block, and further to reduce the friction and thereby reduce wear.

Specifically, in the embodiment, the first segment 21 and the second segment 22 are both square structures. The guide blocks are provided at corresponding positions on the four sides of the first segment 21 and the second segment 22, , thereby being conducive to ensure the smoothness of the movement of the second segment 22 relative to the first segment 21.

Of course, in other embodiments not shown in the drawings, the first segment and the second segment may also be in other shape, such as a columnar shape, a polyhedral structure or the like.

In the embodiment, the inspection system further comprises a hydraulic oil cylinder for driving the second segment 22 to move relative to the first segment 21.

To lock the second segment 22 to a set position when it reaches that set position, so as to fix the cabin 1 to a certain position, the inspection system of the embodiment further comprises a position locking device for restricting the second segment 22 from moving after the second segment 22 reaches the set position.

Specifically, in the embodiment, as shown in Fig. 5, the position locking device comprises a locking screw 25 that is screwed to the first segment 21 . When the locking screw 25 is in a tightened state, an end of the locking screw 25 abuts against the second segment 22. When it needs to control the second segment 22 to move, the locking screw 25 is rotated so that its end moves away from the second segment 22 to achieve unlocking, and the second segment 22 is released from abutting by the locking screw 25 so as to move driven by the hydraulic cylinder. When the second segment 22 reaches a specified position, the locking screw 25 is rotated so that its end moves toward the second segment 22 to abut against the second segment to thereby prevent the second segment from swinging.

The position locking device of the embodiment also comprises a bump which is disposed on the second segment 22 and arranged corresponding to the position of the locking screw 25. The bump may be made of a material with a large coefficient of friction. Alternatively, an end face of the bump that abuts against the locking screw 25 is made of a material with a large coefficient of friction. Such configuration can increase the frictional force when the locking screw 25 abuts against the second segment 22, and prevent the locking screw 25 for coming off from the bump to ensure the reliability of the position locking device.

The inspection system of the embodiment further comprises a position feedback device. The position feedback device emits an in-position signal when the second segment 22 reaches the set position. The in-position signal is issued when the second segment 22 reaches the set position, and after receiving the in-position signal, the locking screw is rotated so that the locking screw abuts against the second segment. At this time, the locking screw and the second segment are in a tight-fit state, and it needs no more adjustment by the working person.

In some embodiment, the position feedback device may also be coupled to the position locking device. After the second segment 22 reaches the set position, the in-position signal is issued, and the position locking device receives the in-position signal and automatically performs a position locking operation, thereby achieving automatic control.

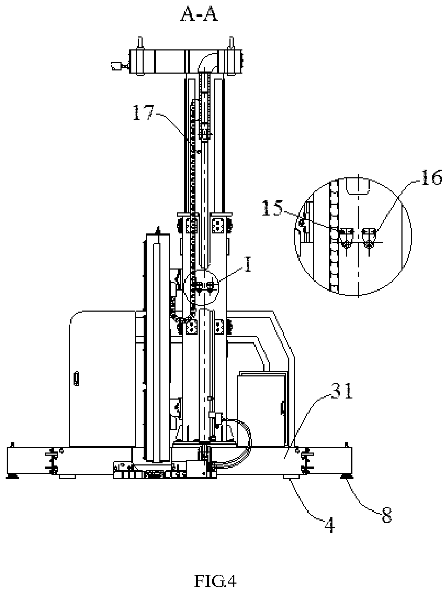

Specifically, as shown in Fig. 4, the position locking device of the embodiment comprises an ascending stroke switch 15, a descending stroke switch 16, an ascending positioning screw (not shown), and a descending positional screw 17. When the vertical support arm 2 is extended, after the ascending stroke switch 15 receives a feedback signal of the ascending positioning screw, the ascending stroke switch 15 sends an electric signal to an oil pump that supplies oil to the hydraulic oil cylinder, and the oil pump stops oil supply to the hydraulic oil cylinder after receiving the electric signal, and the locking screw locks the second segment to prevent the second segment from swinging. When the vertical support arm 2 is retracted, after receiving a feedback signal of the descending positioning screw 17, the descending stroke switch 16 sends an electric signal to the oil pump, the oil pump stops operation, and the inspection system can be transferred to another site.

In the embodiment, to ensure that the telescopic movements of the vertical support arms on the left and right sides can be synchronously performed, the motion of the vertical support arms on the left and right sides is controlled according to the following strategy: the two hydraulic oil cylinders for respectively controlling the movements of the two vertical support arms are be stopped for the oil supply simultaneously only when the ascending stroke switch on the left vertical support arm and the ascending stroke switch on the right vertical support arm are both triggered. That is to say, if only one of the two ascending stroke switches is triggered, the oil pumps for supplying oil to the two hydraulic cylinders work normally. The control strategy when the vertical support arms descend is same as above, and it will not be repeated here.

To prevent the inspection system from shaking to ensure the stable position of the inspection system and improve the imaging performance of the inspection system, as shown in Figs. 1, 2 and 7, the inspection system of the embodiment further comprises two support seats 3 disposed under the two vertical support arms respectively. The lower end of each vertical support arm 2 is in the middle of a support surface of the support seat 3. The boundary lines of the support surface of the support seat 3 exceed the boundary lines of the lower end of the vertical support arm 2, and the support seat 3 increases the ground contact area of the inspection system, thereby being conducive to ensure the stability of the inspection system.

To further increase the ground contact area of the inspection system, the support seat 3 of the embodiment comprises a main body 31 and an auxiliary body 32 disposed at the longitudinal end of the main body 31. In the embodiment, two auxiliary bodies are disposed respectively at the longitudinal ends of the main body 31.

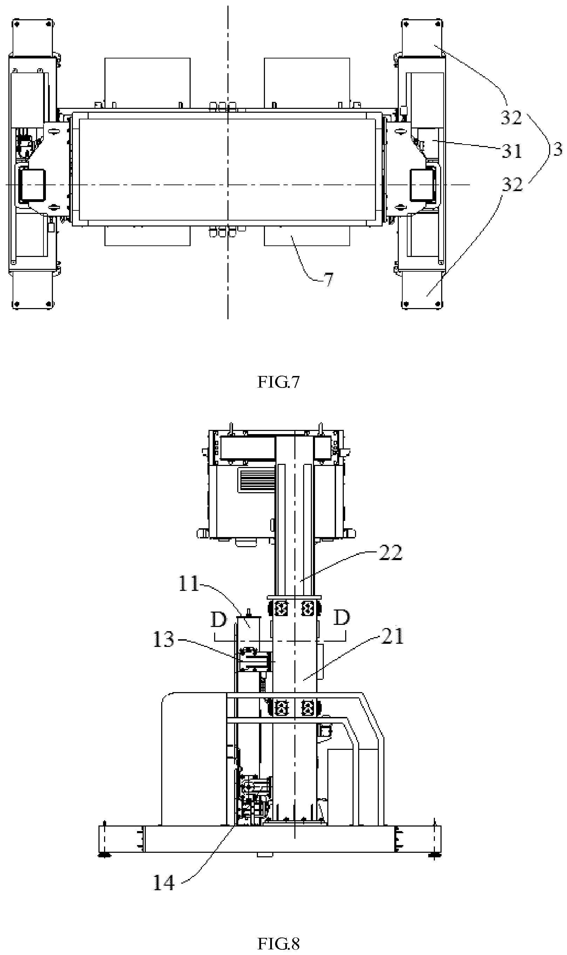

The auxiliary body 32 are foldable relative to the support seat body 31. The auxiliary body 32 are foldable relative to the main body 31 such that when the inspection system is in the working state, as shown in Fig. 7, the auxiliary bodies are unfolded to the front and rear ends of the support seat body 31; and in a site-transfer transportation state, as shown in Figs. 1 and 2, the auxiliary support bodies 32 are folded to the inner sides of the support seat body 31 to reduce the length of the entire inspection system in the front-rear direction to facilitate transportation.

In other embodiments not shown in the drawings, the auxiliary body may be telescopic relative to the main body; for example, the auxiliary body is movably disposed at the inner side of the main body. When site transfer is required, the auxiliary body is moved toward the inside of the support seat body to reduce the length of the inspection system in the front-rear direction; and when the system is transferred to an operation site to enter the working state, the auxiliary support bodies is moved toward the outside of the support seat body to increase the ground contact area of the inspection system.

To improve the grounding stability of the inspection system, the inspection system of the embodiment further comprises three main support plates 4 disposed under the two support seats 3. One of the three main support plates 4 is disposed under one of the two support seats 3, and the other two of the three main support plates 4 are disposed under the other of the two support seats. The three main support plates 4 form a plane so that the inspection system is in a plane and the inspection system can be in a plane at different operation sites, to ensure the stability of the inspection system.

As the three support plates are in one plane, the inspection system may be tilted and swayed when the vehicle passes. To prevent the occurrence of the above phenomenon and thereby ensure the safety of the inspection system, the inspection system of the embodiment further comprises auxiliary support plates 8 disposed under the auxiliary support bodies 32. When the vehicle passes and causes the inspection system to be tilted, the arrangement of the auxiliary support plates 8 plays a function of auxiliary fixing of the inspection system, thereby improving the anti-overturn performance of the inspection system.

As shown in Fig. 1, the inspection system of the embodiment further comprises a cross arm 5 disposed between two support seats 3. A detector is mounted in the cross arm 5. The cross arm 5 is disposed opposite to the cabin 1 and is installed with the detector for receiving rays to obtain a perspective image of the interior of the vehicle.

To allow the vehicle to smoothly enter or exit the inspection passage to obtain a clear and stable perspective image, as shown in Fig. 1, the inspection system of the embodiment further comprises a support ramp 6 disposed between the two support seats 3, the cross arm 5 being fixed relative to the support ramp 6.

Specifically, the cross arm 5 and the support ramp 6 of the embodiment are fixedly connected by positioning pins and bolts.

As shown in Fig. 1, the inspection system of the embodiment further comprises auxiliary ramps 7 disposed on the support ramp 6. The auxiliary ramps 7 include a first auxiliary ramp and a second auxiliary ramp respectively located on the left and right sides. The arrangement of the auxiliary ramps allows the to-be-inspected-vehicle to pass directly, to achieve quick inspection. The first auxiliary ramp and the second auxiliary ramp correspond to the positions of the left and right wheels of the vehicle under inspection respectively. Compared with the prior art in which an auxiliary ramp is arranged over the entire width in the left and right direction, this can reduce the weight of the inspection system and is conducive to site transfer.

To facilitate site transfer, the auxiliary ramps 7 of the embodiment is foldable relative to the support ramp 6. Fig. 1 shows an inward folded state of the auxiliary ramps 7.

In other embodiments not shown in the drawings, the auxiliary ramps can be telescopic relative to the support ramp, and it can also reduce the site-transfer volume of the inspection system.

To achieve a comprehensive inspection of the vehicle, the inspection system of the invention further comprises vertical detecting arm 11 disposed on a lateral side of the vertical support arm 2. A detector is mounted on the vertical detecting arm 11. The detector on the vertical detecting arm 11 receives rays from the ray source to inspect the interior of the vehicle.

Specifically, the inspection system of the embodiment comprises two vertical detecting arms respectively disposed on the lateral sides of the vertical support arms.

The inspection system needs to be on-site installed after the site transfer, and the positions of the vertical detecting arm 11 also need to be adjusted during installation and adjustment of the inspection system.

To achieve the positional adjustment of the vertical detecting arm 11, the inspection system of the present embodiment further comprises a position adjusting mechanism for adjusting the position of the vertical detecting arm 11. The position adjusting mechanism is configured to adjust the angle of the vertical detecting arm. It is also configured to adjust the position of the vertical detecting arm in the front-rear direction and the position thereof in the left-right direction.

In the embodiment, the position adjusting mechanism comprises a connecting seat for connecting the vertical detecting arm 11 and the vertical support arm 2, the connecting seat comprises a first connecting portion for connection with the vertical detecting arm 11 and a second connecting portion for connection with the vertical support arm 2, wherein the connection position between the vertical detecting arm 11 and the first connecting portion is variable; and the connection position between the vertical support arm 2 and the second connecting portion is variable.

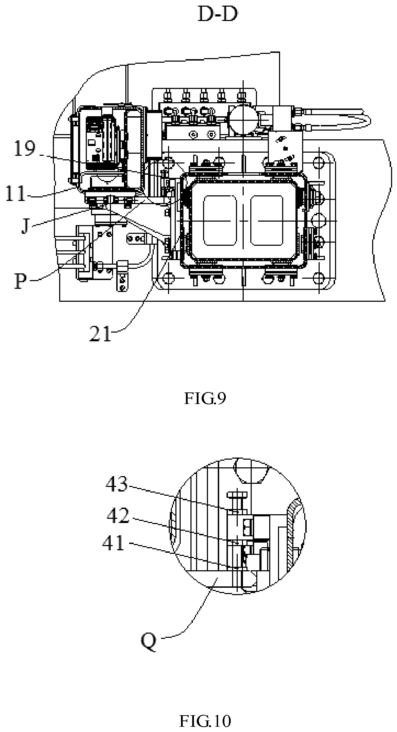

Specifically, in the embodiment, as shown in Figs. 9 and 10, the connecting seat of the embodiment comprises an L-shaped connecting seat. The L-shaped connecting seat comprises a first seat body P and a second seat body Q that are perpendicular to each other. The first seat body P forms the first connecting portion. The second connecting body Q forms the second connecting portion. The connection position between the first seat body P and the vertical detecting arm 11 is variably set to adjust the position and angle of the vertical detecting arm 11 in the front-rear direction.

Specifically, a first long hole is disposed on one of the first seat body and the vertical detecting arm 11, and a first connector is provided on the other of the first seat body and the vertical detecting arm 11, the first connector being disposed in the first long hole. The longitudinal direction of the first long hole is set in the front-rear direction. For example, the first seat body is provided with the first long hole, and the vertical detecting arm 11 is provided with the first connector. Since the first connector can move within the first long hole, a space is provided for the forward and backward movement of the vertical detecting arm 11. Moreover, when it needs to adjust the angle of the vertical detecting arm 11, it can also be achieved by controlling the vertical detecting arm to rotate about the joint of the first connector and the first long hole.

To achieve the positional adjustment of the vertical detecting arm in the left-right direction, as shown in Figs. 9 and 10, the connection position between the second seat body Q and the vertical support arm 2 of the embodiment is adjustably set. Specifically, the connection position between the second seat body Q and the first segment 21 is adjustable.

Specifically, a second long hole is formed on one of the second seat body Q and the first segment 21, and a second connector is provided on the other of the second seat body Q and the first segment 21, the second connector being disposed in the second long hole, and the second long hole being provided in the left-right direction. For example, the second seat body Q is provided with the second long hole, and the vertical detecting arm 11 is provided with the second connector. As the second connector can move within the second long hole, a space is provided for the positional adjustment of the vertical detecting arm 11 in the left-right direction.

In the embodiment, the longitudinal directions of the first long hole and the second long hole are perpendicular to each other. However, in other embodiments not shown in the drawings, the longitudinal directions of the first long hole and the second long hole may be set at other angles as long as the provisional adjustment of the vertical detecting arm in the front-rear direction and the left-right direction can be achieved. Of course, in the embodiment, the longitudinal direction of the first long hole is set to the front-rear direction, and the longitudinal direction of the second long hole is set to the left-right direction, which is more convenient for the provisional adjustment.

After adjusting the position of the vertical detecting arm 11, it also needs to locate the position of the vertical detecting arm 11. Therefore, the position adjusting mechanism of the embodiment further comprises a first limiting structure for limiting the position of the vertical detecting arm 11 relative to the first seat body P, the first limiting structure including a first abutting seat provided on the vertical detecting arm 11 and a first adjusting column and a second adjusting column respectively abutting against two sides of the first abutting seat in the longitudinal direction of the first long hole, the first adjusting column and the second adjusting column being movably provided on the first seat body P along the length direction of the first long hole. Before adjusting the position of the vertical detecting arm, the first adjusting column and the second adjusting column respectively abut on the two sides of the first abutting seat, so the position of the vertical detecting arm is fixed. When it is desired to adjust the position of the vertical detecting arm, the first adjusting column or the second adjusting column is rotated away from the corresponding side of the first abutting seat, and then the vertical detecting arm is controlled to move a set distance, and after arrival at that place, the first adjusting column and the second adjusting column are rotated respectively to abut against the respective sides of the first abutting seat to accomplish locating.

Preferably, to fix the first adjusting column and the second adjusting column within the range of movement, the position adjusting mechanism of the embodiment further comprises a fixing portion for fixing the first adjusting column and/or the second adjusting column. In the embodiment, the first adjusting column and the second adjusting column are studs, and the fixing portion may be a nut.

Likewise, the position adjusting mechanism of the embodiment further comprises a second limiting structure for limiting the position of the second seat body Q relative to the vertical support arm 2. The second limiting structure comprises a second abutting seat provided on the vertical support arm 2 and a third adjusting column and a fourth adjusting column respectively abutting against two sides of the second abutting seat in the longitudinal direction of the second long hole, the third adjusting column and the fourth adjusting column being movably provided on the second seat body Q along the length of the second long hole and having at least two connection positions within the range of movement.

As shown in Fig. 10, the position adjusting mechanism of the embodiment comprises an adjusting stud 19. The right end of the adjusting stud 19 is abutted against the second seat body Q by a first nut 41 and is passed into the second abutting seat. A second nut 42 and a third nut 43 in threaded fit with the adjusting stud 19 abut against two sides of the second abutting seat, respectively. To adjust the left-right position of the vertical detecting arm, it needs to first loosen the second nut 42 and the third nut 43, then adjust the position of the second seat body Q relative to the vertical support arm 2, and after the second seat body is in place, abut the second nut 42 and the third nut 43 respectively against the left and right sides of the second abutting seat to complete the position fixing.

Specifically, in the embodiment, the inspection system comprises two connecting seats disposed in the vertical direction, which are a first connecting seat 13 and a second connecting seat 14, respectively. To adjust the angle of the vertical detecting arm, the connection between the second connecting seat 14 and the vertical detecting arm can be as a center of rotation for the adjustment. To adjust the front-rear position of the vertical detecting arm, the position of the vertical detecting arm relative to the first connecting seat and the position of the vertical detecting arm relative to the second connecting seat are simultaneously adjusted to achieve it. To adjust the left-right position of the vertical detecting arm, the position of the second seat body of the first connecting seat and the position of the second seat body of the second connecting seat with respect to the vertical support arm are simultaneously adjusted to achieve it.

The position adjusting mechanism of the embodiment has a simple structure, and can achieve adjustment of a plurality of degrees of freedom, thereby meeting the position adjustment requirements of the vertical detecting arm.

Finally, it should be noted that the above embodiments are only used for illustrating rather than limiting the technical solutions of the present invention. Although the present invention is described in detail with reference to the preferred embodiments, those of ordinary skill in the art should understand that they still can make modifications to the specific embodiments of the present invention or make equivalent substitutions to part of the technical features thereof; and such modifications or substitutions should be encompassed within the technical solutions claimed in the invention as long as they do not depart from the scope of the appended claims.

## Claims

1. A vehicle inspection system, comprising a portal frame for forming an inspection passage, the portal frame comprising:
a cabin (1) for installing a ray source; and
two vertical support arms (2) respectively telescopically arranged at both sides of the cabin (1) to support the cabin;
wherein the vertical support arm (2) comprises a first segment (21) and a second segment (22) arranged in a vertical direction, the cabin (1) being arranged on the second segment (22), and the second segment (22) being movable relative to the first segment (21), the first segment (21) is sleeved on the outer side of the second segment (22);
the vehicle inspection system being **characterized by** a vertical detecting arm (11) disposed on a lateral side of the vertical support arm (2) along the travelling direction of the vehicle, and a detector mounted on the vertical detecting arm (11), said detector being for receiving rays from the ray source to inspect the interior of the vehicle.

2. The vehicle inspection system of claim 1, wherein the first segment (21) is provided with a first guiding structure (23), and the second segment (22) is provided with a second guiding structure (24), the first guiding structure (23) being in sliding engagement with the second guiding structure (24)

3. The vehicle inspection system of claim 2, wherein the first guiding structure comprises a first guide block extending in the vertical direction, and the second guiding structure comprises a second guide block extending in the vertical direction, one of the first guide block and the second guide block is provided with a vertical rib on an engaging surface thereof.

4. The vehicle inspection system of claim 1, wherein the inspection system further comprises a position locking device for restricting movement of the second segment (22) after the second segment (22) reaches a preset position and a position feedback device, which emits an in-position signal when the second segment reaches a preset position.

5. The vehicle inspection system of claim 4, wherein the position locking device comprises a locking screw that is screwed to one of the first segment (21) and the second segment (22), and when the locking screw is in a tightened state, an end of the locking screw abuts against the other of the first segment (21) and the second segment (22).

6. The vehicle inspection system of any of claims 1-5, further comprising two support seats (3) disposed under the two vertical support arms (2) respectively, and the lower end of each vertical support arm (2) is located in the middle of a support surface of the support seat, and further comprising three main support plates disposed under the two support seats (3), one of the three main support plates being disposed under one of the two support seats (3), and the other two of the three main support plates being disposed under the other of the two support seats .

7. The vehicle inspection system of any of claims 1-5, further comprising two support seats (3) disposed under the two vertical support arms (2) respectively, wherein the support seat (3) comprises a main support seat (31) and an auxiliary support seat (32) disposed at the longitudinal end of the main support seat (31), and the auxiliary support seat (32) is foldable or telescopic relative to the main support seat (31).

8. The vehicle inspection system of any of claims 1-5, further comprising two support seats (3) disposed under the two vertical support arms (2) respectively, a lateral arm (5) and a support ramp disposed between the two support seats, and a detector is mounted in the lateral arm (5), the lateral arm (5) being fixed relative to the support ramp (6).

9. The vehicle inspection system of claim 8, further comprising auxiliary ramps (7) disposed on the support ramp (6), and the auxiliary ramps comprise a first auxiliary ramp and a second auxiliary ramp respectively located on the left and right sides, and the auxiliary ramps are telescopic or foldable relative to the support ramp (6).

10. The vehicle inspection system of any of claims 1-5, further comprising a position adjusting mechanism for adjusting the position of the vertical detecting arm (11).

11. The vehicle inspection system of claim 10, wherein the position adjusting mechanism comprises a connecting seat for connecting the vertical detecting arm (11) and the vertical support arm (2), the connecting seat comprising a first connecting portion for connection with the vertical detecting arm (11) and a second connecting portion for connection with the vertical support arm (2), wherein the connection position between the vertical detecting arm (11) and the first connecting portion is variable; and/or the connection position between the vertical support arm (2) and the second connecting portion is variable.

12. The vehicle inspection system of claim 11, wherein a first long hole is disposed on one of the first connecting portion and the vertical detecting arm (11), and a first connector is provided on the other of the first connecting portion and the vertical detecting arm (11), the first connector being disposed in the first long hole; and/or a second long hole is disposed on one of the second connecting portion and the vertical support arm (2), and a second connector is provided on the other of the second connecting portion and the vertical support arm (2), the second connector being disposed in the second long hole.

13. The vehicle inspection system of claim 12, wherein the first long hole is inclined or perpendicular relative to the second long hole.

14. The vehicle inspection system of claim 12, wherein the position adjusting mechanism further comprises a first limiting structure for limiting the position of the vertical detecting arm (11) relative to the first connecting portion, the first limiting structure comprising a first abutting seat provided on the vertical detecting arm (11), a first adjusting column and a second adjusting column respectively abutting against two sides of the first abutting seat in the longitudinal direction of the first long hole, the first adjusting column and the second adjusting column being movably provided on the first connecting portion along the length direction of the first long hole and having at least two connection positions within the respective ranges of movement; and/or the position adjusting mechanism further comprises a second limiting structure for limiting the position of the second connecting portion relative to the vertical support arm (2), the second limiting structure comprising a second abutting seat provided on the vertical support arm (2) and a third adjusting column and a fourth adjusting column respectively abutting against two sides of the second abutting seat in the longitudinal direction of the second long hole, the third adjusting column and the fourth adjusting column being movably provided on the second connecting portion along the length direction of the second long hole and having at least two connection positions within the respective ranges of movement.

## Patentansprüche

1. Fahrzeuginspektionssystem, umfassend einen Portalrahmen zum Bilden einer Inspektionspassage, wobei der Portalrahmen Folgendes umfasst:
eine Kabine (1) zum Einbau einer Strahlenquelle; und
zwei vertikale Tragarme (2), die jeweils an beiden Seiten der Kabine (1) teleskopisch angeordnet sind, um die Kabine zu tragen;
wobei der vertikale Tragarm (2) ein erstes Segment (21) und ein zweites Segment (22) umfasst, die in einer vertikalen Richtung angeordnet sind, wobei die Kabine (1) am zweiten Segment (22) angeordnet ist und das zweite Segment (22) in Bezug auf das erste Segment (21) beweglich ist, wobei das erste Segment (21) auf die Außenseite des zweiten Segments (22) geschoben ist;
wobei das Fahrzeuginspektionssystem **gekennzeichnet ist durch** einen vertikalen Detektionsarm (11), der an einer lateralen Seite des vertikalen Tragarms (2) entlang der Fahrtrichtung des Fahrzeugs angeordnet ist, und einen Detektor, der an dem vertikalen Detektionsarm (11) montiert ist, wobei der Detektor dafür eingerichtet ist, Strahlen von der Strahlenquelle zu empfangen, um das Innere des Fahrzeugs zu inspizieren.

2. Fahrzeuginspektionssystem nach Anspruch 1, wobei das erste Segment (21) mit einer ersten Führungsstruktur (23) versehen ist und das zweite Segment (22) mit einer zweiten Führungsstruktur (24) versehen ist, wobei sich die erste Führungsstruktur (23) in gleitendem Eingriff mit der zweiten Führungsstruktur (24) befindet.

3. Fahrzeuginspektionssystem nach Anspruch 2, wobei die erste Führungsstruktur einen ersten Führungsblock umfasst, der sich in der vertikalen Richtung erstreckt, und die zweite Führungsstruktur einen zweiten Führungsblock umfasst, der sich in der vertikalen Richtung erstreckt, wobei einer von dem ersten Führungsblock und dem zweiten Führungsblock mit einer vertikalen Rippe an einer Eingriffsfläche davon versehen ist.

4. Fahrzeuginspektionssystem nach Anspruch 1, wobei das Inspektionssystem ferner Folgendes umfasst: eine Positionsverriegelungsvorrichtung zum Einschränken der Bewegung des zweiten Segments (22), nachdem das zweite Segment (22) eine voreingestellte Position erreicht hat, und eine Positionsrückmeldungsvorrichtung, die ein In-Position-Signal aussendet, wenn das zweite Segment eine voreingestellte Position erreicht hat.

5. Fahrzeuginspektionssystem nach Anspruch 4, wobei die Positionsverriegelungsvorrichtung eine Verriegelungsschraube umfasst, die an eines von dem ersten Segment (21) und dem zweiten Segment (22) geschraubt ist, und wobei, wenn sich die Verriegelungsschraube in einem angezogenen Zustand befindet, ein Ende der Verriegelungsschraube an dem anderen von dem ersten Segment (21) und dem zweiten Segment (22) anliegt.

6. Fahrzeuginspektionssystem nach einem der Ansprüche 1 bis 5, ferner umfassend zwei Tragsitze (3), die jeweils unter den zwei vertikalen Tragarmen (2) angeordnet sind, wobei sich das untere Ende jedes vertikalen Tragarms (2) in der Mitte einer Tragfläche des Tragsitzes befindet, und ferner umfassend drei Haupttragplatten, die unter den zwei Tragsitzen (3) angeordnet sind, wobei eine der drei Haupttragplatten unter einem der zwei Tragsitze (3) angeordnet ist und die anderen zwei der drei Haupttragplatten unter dem anderen der zwei Tragsitze angeordnet sind.

7. Fahrzeuginspektionssystem nach einem der Ansprüche 1 bis 5, ferner umfassend zwei Tragsitze (3), die jeweils unter den zwei vertikalen Tragarmen (2) angeordnet sind, wobei der Tragsitz (3) einen Haupttragsitz (31) und einen Hilfstragsitz (32) umfasst, der an dem Längsende des Haupttragsitzes (31) angeordnet ist, und wobei der Hilfstragsitz (32) in Bezug auf den Haupttragsitz (31) klappbar oder teleskopisch ist.

8. Fahrzeuginspektionssystem nach einem der Ansprüche 1 bis 5, ferner umfassend zwei Tragsitze (3), die jeweils unter den zwei vertikalen Tragarmen (2) angeordnet sind, wobei ein lateraler Arm (5) und eine Tragrampe zwischen den zwei Tragsitzen angeordnet sind und ein Detektor in dem lateralen Arm (5) montiert ist, wobei der laterale Arm (5) in Bezug auf die Tragrampe (6) feststehend ist.

9. Fahrzeuginspektionssystem nach Anspruch 8, ferner umfassend Hilfsrampen (7), die an der Tragrampe (6) angeordnet sind, wobei die Hilfsrampen eine erste Hilfsrampe und eine zweite Hilfsrampe umfassen, die jeweils an der rechten und linken Seite montiert sind, und wobei die Hilfsrampen in Bezug auf die Tragrampe (6) teleskopisch oder klappbar sind.

10. Fahrzeuginspektionssystem nach einem der Ansprüche 1 bis 5, ferner umfassend einen Positionseinstellungsmechanismus zum Einstellen der Position des vertikalen Detektionsarms (11) .

11. Fahrzeuginspektionssystem nach Anspruch 10, wobei der Positionseinstellungsmechanismus einen Verbindungssitz zum Verbinden des vertikalen Detektionsarms (11) und des vertikalen Tragarms (2) umfasst, wobei der Verbindungssitz einen ersten Verbindungsabschnitt zur Verbindung mit dem vertikalen Detektionsarm (11) und einen zweiten Verbindungsabschnitt zur Verbindung mit dem vertikalen Tragarm (2) umfasst, wobei die Verbindungsposition zwischen dem vertikalen Detektionsarm (11) und dem ersten Verbindungsabschnitt variabel ist; und/oder wobei die Verbindungsposition zwischen dem vertikalen Tragarm (2) und dem zweiten Verbindungsabschnitt variabel ist.

12. Fahrzeuginspektionssystem nach Anspruch 11, wobei ein erstes Langloch an einem von dem ersten Verbindungsabschnitt und dem vertikalen Detektionsarm (11) angeordnet ist und ein erster Verbinder an dem anderen von dem ersten Verbindungsabschnitt und dem vertikalen Detektionsarm (11) angeordnet ist, wobei der erste Verbinder in dem ersten Langloch angeordnet ist; und/oder wobei ein zweites Langloch an einem von dem zweiten Verbindungsabschnitt und dem vertikalen Tragarm (2) angeordnet ist und ein zweiter Verbinder an dem anderen von dem zweiten Verbindungsabschnitt und dem vertikalen Tragarm (2) angeordnet ist, wobei der zweite Verbinder in dem zweiten Langloch angeordnet ist.

13. Fahrzeuginspektionssystem nach Anspruch 12, wobei das erste Langloch in Bezug auf das zweite Langloch geneigt oder senkrecht ist.

14. Fahrzeuginspektionssystem nach Anspruch 12, wobei der Positionseinstellungsmechanismus ferner eine erste Begrenzungsstruktur zur Begrenzung der Position des vertikalen Detektionsarms (11) in Bezug auf den ersten Verbindungsabschnitt umfasst, wobei die erste Begrenzungsstruktur einen ersten Anlagesitz, der an dem vertikalen Detektionsarm (11) vorgesehen ist, eine erste Einstellsäule und eine zweite Einstellsäule umfasst, die jeweils an den zwei Seiten des ersten Anlagesitzes in der Längsrichtung des ersten Langlochs anliegen, wobei die erste Einstellsäule und die zweite Einstellsäule an dem ersten Verbindungsabschnitt entlang der Längsrichtung des ersten Langlochs beweglich vorgesehen sind und wenigstens zwei Verbindungspositionen innerhalb der jeweiligen Bewegungsbereiche aufweisen; und/oder wobei der Positionseinstellungsmechanismus ferner eine zweite Begrenzungsstruktur zum Begrenzen der Position des zweiten Verbindungsabschnitts in Bezug auf den vertikalen Tragarm (2) umfasst, wobei die zweite Begrenzungsstruktur einen zweiten Anlagesitz, der an dem vertikalen Tragarm (2) vorgesehen ist, und eine dritte Einstellsäule und eine vierte Einstellsäule umfasst, die jeweils an den zwei Seiten des zweiten Anlagesitzes in der Längsrichtung des zweiten Langlochs anliegen, wobei die dritte Einstellsäule und die vierte Einstellsäule an dem zweiten Verbindungsabschnitt entlang der Längsrichtung des zweiten Langlochs beweglich vorgesehen sind und wenigstens zwei Verbindungspositionen innerhalb der jeweiligen Bewegungsbereiche aufweisen.

## Revendications

1. Système d'inspection de véhicule, comprenant un portique pour former un passage d'inspection, le portique comprenant :
une cabine (1) pour installer une source de rayons ; et
deux bras de support verticaux (2) agencés respectivement de façon télescopique des deux côtés de la cabine (1) pour supporter la cabine ;
dans lequel le bras de support vertical (2) comprend un premier segment (21) et un second segment (22) agencés dans une direction verticale, la cabine (1) étant agencée sur le second segment (22), et le second segment (22) étant mobile par rapport au premier segment (21), le premier segment (21) est manchonné sur le côté externe du second segment (22) ;
le système d'inspection de véhicule étant **caractérisé par** un bras de détection vertical (11) disposé sur un côté latéral du bras de support vertical (2) suivant la direction de déplacement du véhicule, et un détecteur monté sur le bras de détection vertical (11), ledit détecteur étant destiné à recevoir des rayons en provenance de la source de rayons pour inspecter l'intérieur du véhicule.

2. Système d'inspection de véhicule selon la revendication 1, dans lequel le premier segment (21) est pourvu d'une première structure de guidage (23), et le second segment (22) est pourvu d'une seconde structure de guidage (24), la première structure de guidage (23) étant en engagement coulissant avec la seconde structure de guidage (24).

3. Système d'inspection de véhicule selon la revendication 2, dans lequel la première structure de guidage comprend un premier bloc-guide s'étendant dans la direction verticale, et la seconde structure de guidage comprend un second bloc-guide s'étendant dans la direction verticale, l'un du premier bloc-guide et du second bloc-guide est pourvu d'une nervure verticale sur une surface d'engagement de celui-ci.

4. Système d'inspection de véhicule selon la revendication 1, dans lequel le système d'inspection comprend en outre un dispositif de blocage de position pour restreindre un mouvement du second segment (22) après que le second segment (22) atteint une position préétablie et un dispositif de retour de position, qui émet un signal en position lorsque le second segment atteint une position préétablie.

5. Système d'inspection de véhicule selon la revendication 4, dans lequel le dispositif de blocage de position comprend une vis de blocage qui est vissée sur l'un du premier segment (21) et du second segment (22), et lorsque la vis de blocage est dans un état serré, une extrémité de la vis de blocage bute contre l'autre du premier segment (21) et du second segment (22).

6. Système d'inspection de véhicule selon l'une quelconque des revendications 1 à 5, comprenant en outre deux assises de support (3) disposées respectivement sous les deux bras de support verticaux (2), et l'extrémité inférieure de chaque bras de support vertical (2) est située au milieu d'une surface de support de l'assise de support, et comprenant en outre trois plaques de support principales disposées sous les deux assises de support (3), l'une des trois plaques de support principales étant disposée sous l'une des deux assises de support (3), et les deux autres des trois plaques de support principales étant disposées sous l'autre des deux assises de support.

7. Système d'inspection de véhicule selon l'une quelconque des revendications 1 à 5, comprenant en outre deux assises de support (3) disposées respectivement sous les deux bras de support verticaux (2), dans lequel l'assise de support (3) comprend une assise de support principale (31) et une assise de support auxiliaire (32) disposée au niveau de l'extrémité longitudinale de l'assise de support principale (31), et l'assise de support auxiliaire (32) est pliante ou télescopique par rapport à l'assise de support principale (31).

8. Système d'inspection de véhicule selon l'une quelconque des revendications 1 à 5, comprenant en outre deux assises de support (3) disposées respectivement sous les deux bras de support verticaux (2), un bras latéral (5) et une rampe de support disposés entre les deux assises de support, et un détecteur est monté dans le bras latéral (5), le bras latéral (5) étant fixe par rapport à la rampe de support (6).

9. Système d'inspection de véhicule selon la revendication 8, comprenant en outre des rampes auxiliaires (7) disposées sur la rampe de support (6), et les rampes auxiliaires comprennent une première rampe auxiliaire et une seconde rampe auxiliaire situées respectivement sur les côtés gauche et droit, et les rampes auxiliaires sont télescopiques ou pliantes par rapport à la rampe de support (6).

10. Système d'inspection de véhicule selon l'une quelconque des revendications 1 à 5, comprenant en outre un mécanisme de réglage de position pour régler la position du bras de détection vertical (11).

11. Système d'inspection de véhicule selon la revendication 10, dans lequel le mécanisme de réglage de position comprend une assise de raccordement pour raccorder le bras de détection vertical (11) et le bras de support vertical (2), l'assise de raccordement comprenant une première portion de raccordement pour un raccordement avec le bras de détection vertical (11) et une seconde portion de raccordement pour un raccordement avec le bras de support vertical (2), dans lequel la position de raccordement entre le bras de détection vertical (11) et la première portion de raccordement est variable ; et/ou la position de raccordement entre le bras de support vertical (2) et la seconde portion de raccordement est variable.

12. Système d'inspection de véhicule selon la revendication 11, dans lequel un premier trou long est disposé sur l'un de la première portion de raccordement et du bras de détection vertical (11), et un premier raccord est prévu sur l'autre de la première portion de raccordement et du bras de détection vertical (11), le premier raccord étant disposé dans le premier trou long ; et/ou un second trou long est disposé sur l'un de la seconde portion de raccordement et du bras de support vertical (2), et un second raccord est prévu sur l'autre de la seconde portion de raccordement et du bras de support vertical (2), le second raccord étant disposé dans le second trou long.

13. Système d'inspection de véhicule selon la revendication 12, dans lequel le premier trou long est incliné ou perpendiculaire par rapport au second trou long.

14. Système d'inspection de véhicule selon la revendication 12, dans lequel le mécanisme de réglage de position comprend en outre une première structure de limitation pour limiter la position du bras de détection vertical (11) par rapport à la première portion de raccordement, la première structure de limitation comprenant une première assise de butée prévue sur le bras de détection vertical (11), une première colonne de réglage et une deuxième colonne de réglage butant respectivement contre deux côtés de la première assise de butée dans la direction longitudinale du premier trou long, la première colonne de réglage et la deuxième colonne de réglage étant prévues mobiles sur la première portion de raccordement suivant la direction de longueur du premier trou long et ayant au moins deux positions de raccordement au sein des plages respectives de mouvement ; et/ou le mécanisme de réglage de position comprend en outre une seconde structure de limitation pour limiter la position de la seconde portion de raccordement par rapport au bras de support vertical (2), la seconde structure de limitation comprenant une seconde assise de butée prévue sur le bras de support vertical (2) et une troisième colonne de réglage et une quatrième colonne de réglage butant respectivement contre deux côtés de la seconde assise de butée dans la direction longitudinale du second trou long, la troisième colonne de réglage et la quatrième colonne de réglage étant prévues mobiles sur la seconde portion de raccordement suivant la direction de longueur du second trou long et ayant au moins deux positions de raccordement au sein des plages respectives de mouvement.
